# EUROPÄISCHE PATENTSCHRIFT

(11) **EP 2 605 860 B1**
(45) Veröffentlichungstag und Bekanntmachung des Hinweises auf die Patenterteilung: **15.10.2014**
(21) Anmeldenummer: 11741112.4
(22) Anmeldetag: 29.07.2011
(51) Int. Cl.: B05C 5/02, B05C 11/10, B05C 5/00, F16K 31/08, F16K 31/06, F16K 49/00, B31B 1/62, B65B 51/02, B05B 1/30

(54) **LEIMVENTIL UND VERFAHREN ZUR STEUERUNG DESSELBEN**
GLUE VALVE AND METHOD FOR CONTROLLING SAME
SOUPAPE À COLLE ET PROCÉDÉ DE COMMANDE CORRESPONDANT

(30) Priorität: 18.08.2010 DE 102010034761
(43) Veröffentlichungstag der Anmeldung: 26.06.2013
(73) Patentinhaber: Focke & Co. (GmbH & Co. KG), 27283 Verden (DE)
(72) Erfinder: STEGEN, Marc-Daniel, 22043 Hamburg (DE); ROHWEDDER, Wolfgang, 22527 Hamburg (DE); SCHNAKENBERG, Jan, 27337 Blender (DE)
(74) Vertreter: Aulich, Martin
(86) Internationale Anmeldenummer: PCT/EP2011/003810
(87) Internationale Veröffentlichungsnummer: WO 2012/022423

(56) Entgegenhaltungen:
- DE-A1-102007 029 064
- FR-A1- 2 807 136
- US-A- 4 306 704

## Beschreibung

Die vorliegende Erfindung betrifft ein Leimventil mit einem steuerbar betätigbarem Verschlussorgan, mit dem das Ventil zwischen einer Öffnungsstellung und einer Schließstellung hin- und herschaltbar ist und mit einer Wärmequelle, mit der durch das Leimventil führbarer Leim erwärmbar ist. Sie betrifft des Weiteren ein Verfahren zur Steuerung eines solchen Ventils.

Es sind Leimventile bekannt, bei denen das Verschlussorgan mittels eines Elektromagneten geschaltet wird, siehe z.B. DE 102 007 029 064 A1. Weiter sind Leimventile bekannt, bei denen der zugeführte Leim, in der Regel sogenannter Heißleim, im Ventil erhitzt wird. Hierzu werden separate Heizpatronen eingesetzt. Die Heizpatronen benötigen allerdings viel Platz und eine gesonderte Energie- und Kabelzufuhr. Zudem ist die Heizpatrone in der Regel räumlich weit entfernt von der Ventilkammer angeordnet. Diese räumliche Distanz macht es erforderlich, die Heizpatrone mit hoher Temperatur zu fahren.

Hiervon ausgehend ist es Aufgabe der vorliegenden Erfindung, ein Leimventil anzugeben, dass sich durch eine möglichst effiziente Übertragung von Wärme auf den Leim auszeichnet bei gleichzeitig möglichst kompaktem und leistungsfähigem Aufbau. Zudem ist es Aufgabe der vorliegenden Erfindung, ein geeignetes Steuerungsverfahren zum Betreiben eines derartigen Leimventils anzugeben.

Diese Aufgabe wird gelöst durch ein Leimventil mit den Merkmalen des Anspruches 1 sowie durch ein Steuerungsverfahren mit den Merkmalen des Anspruches 6.

Entsprechend ist ein erfindungsgemäßes Leimventil dadurch gekennzeichnet, dass das Ventil mindestens zwei unabhängig voneinander mit Strom beaufschlagbare, entlang einer gemeinsamen Achse angeordnete Elektromagneten mit jeweils mindestens einer Spule aufweist, mit denen das Verschlussorgan betätigbar ist und mit denen der durch das Ventil führbare Leim erwärmbar ist. Dabei sind die beiden Elektromagneten derart positioniert und ausgebildet, dass sich die magnetischen Wirkungen der Spulen der beiden Elektromagneten abhängig von deren Beaufschlagung mit Strom entlang der gemeinsamen Achse entweder verstärken oder mindestens teilweise, vorzugsweise vollständig aufheben.

Dementsprechend verfügt ein erfindungsgemäßes Leimventil über mindestens zwei unabhängig schaltbare bzw. mit Strom beaufschlagbare Elektromagneten, die zudem als Wärmequelle zur Erwärmung des Leims dienen.

Das erfindungsgemäße Steuerungsverfahren zeichnet sich dadurch aus, dass die Spulen der Elektromagnete entweder mit Strom mit gegensinnigen Richtungen beaufschlagt werden, sodass sich die magnetischen Wirkungen der Spulen der beiden Elektromagnete in der genannten Weise teilweise aufheben oder mit Strom mit gleichsinnigen Richtungen, sodass sich die magnetischen Wirkungen der beiden Spulen verstärken.

Bevorzugt sind die Spulen der beiden Elektromagnete derart gewickelt, dass sie eine bzw. mehrere gemeinsame Lagen aus Windungen bilden. Dabei wird in der Regel die unterste gemeinsame Windungslage auf einem geeigneten, beiden Spulen zugeordneten Spulenkörper angeordnet sein. Vorzugsweise folgen die Windungen der einen Spule und die Windungen der anderen Spule, die in der jeweiligen gemeinsamen Windungslage angeordnet sind, abwechselnd aufeinander. Hierdurch wird erreicht, dass sich bei Beaufschlagung der Spulen mit Strömen identischer Stärke und gegensinnigen Richtungen die magnetischen Wirkungen der beiden Elektromagnete zumindest im Inneren der Spulen nahezu vollständig oder vollständig aufheben können.

Zweckmäßigerweise ist das Verschlussorgan des Ventils mittels eines Schließkraft ausübenden Schließorgans, etwa eines oder mehrerer Dauermagneten, in die Schließstellung bewegbar bzw. dort haltbar, wobei das Verschlussorgan dann durch in Öffnungsrichtung wirkende Magnetkraft der Elektromagneten in die Öffnungsstellung bewegt bzw. dort gehalten werden kann. Die Stärken der durch die Elektromagneten fließenden Ströme und damit die durch die Magnetkraft bewirkte Öffnungskraft sind dann so zu dimensionieren, dass die Öffnungskraft der Elektromagneten die Schließkraft des Schließorgans übersteigt.

Alternativ ist in Umkehrung dieses Prinzips natürlich grundsätzlich auch vorstellbar, dass das Verschlussorgan mittels eines Öffnungskraft ausübenden Öffnungsorgans, beispielsweise ebenfalls eines oder mehrerer Dauermagneten, in die Öffnungsstellung bewegbar bzw. dort haltbar ist, wobei das Verschlussorgan dann durch in Schließrichtung wirkende Magnetkraft der Elektromagneten in die Schließstellung bewegt bzw. dort gehalten werden kann. Die Dimensionierung der Ströme durch die Elektromagneten muss dabei in analoger Weise derart erfolgen, dass die Magnetkraft der Elektromagneten die Öffnungskraft des Öffnungsorgans übersteigt.

Weitere Merkmale der vorliegenden Erfindung ergeben sich aus den beigefügten Patentansprüchen, der nachfolgenden Beschreibung eines bevorzugten Ausführungsbeispieles sowie aus den beigefügten Zeichnungen. Darin zeigt:
- Fig. 1: ein Leimventil in einem Vertikalschnitt,
- Fig. 2: die Einzelheit I des Leimventils aus Fig. 1,
- Fig. 3: eine Schaltskizze einer zur Steuerung des Leimventils verwendeten Schaltung in einem ersten Schaltzustand,
- Fig. 4: die Schaltung aus Fig. 3 in einem zweiten Schaltzustand,
- Fig. 5: ein Diagramm über den zeitlichen Verlauf von elektrischen Strömen, mit denen zwei Elektromagnete des Leimventils beaufschlagt werden.

Das in den Zeichnungen gezeigte Leimventil 10 wird bevorzugt zur Übertragung von verhältnismäßig kleinen Leimportionen auf Faltlappen von Packungen, wie etwa Zigarettenpackungen eingesetzt. Es ist auf hohe Taktzahlen ausgelegt.

Das Leimventil 10 umfasst ein Ventilgehäuse 11 sowie ein daran befestigtes Steckergehäuse 12.

Innerhalb des Ventilgehäuses 11, nämlich in einem Ventilgehäuseinnenraum 13, sind zwei Elektromagnete 14a und 14b angeordnet. Grundsätzlich könnten auch mehr als zwei Elektromagnete eingesetzt werden.

Jeder Elektromagnet 14a, 14b verfügt über eine Spule 15a, 15b mit einzelnen Windungen 16a, 16b.

Die Spulen 15a, 15b sind in der vorliegenden Ausführungsform aufgewickelt auf einem Spulenträger bzw. Spulenkörper 17. Dieser verfügt in diesem Fall im Bereich der Wicklung der Spulen 15a, 15b über eine zylindrische Oberfläche 18. Es liegt auch im Rahmen der Erfindung, auf einen solchen Spulenkörper 17 zu verzichten, sodass die Spulen in diesem Fall freitragend ausgebildet wären.

Der Spulenkörper 17 ist Teil einer Ventilkammer 19. Innerhalb der Spulen 15a, 15b, insbesondere innerhalb einer mittigen Öffnung des Spulenkörpers 17 bzw. innerhalb der Ventilkammer 19 ist ein Verschluss- bzw. Dosierorgan 20 des Ventils 10 bewegbar angeordnet, nämlich ein Ventilstößel.

An einem unteren Schaft 21 des Verschlussorgans 20 ist eine Kugel 22 als Verschlussmittel für eine Dosieröffnung bzw. Ventilöffnung 23 befestigt. Die Ventilöffnung 23 ist mittig im Bereich eines trichterförmigen Ventilsitzes 24 angeordnet. Die Kugel 22 liegt in Schließstellung des Ventils an konischen Sitzflächen an.

Über einen Leimanschluss 25 kann dem Leimventil 10 zu dosierender Leim aus einer nicht dargestellten Leimquelle zugeführt werden. Von dem Leimanschluss 25 wird der Leim entlang eines Leimkanals 34 des Leimventils 10 über einen Anschlusskanal 34a in die Ventilkammer 19 geführt.

Das Verschlussorgan 20 wird durch geeignete Beaufschlagung der Elektromagneten 14a, 14b mit elektrischem Strom geöffnet, sodass Leim aus der Ventilkammer 19 austreten kann.

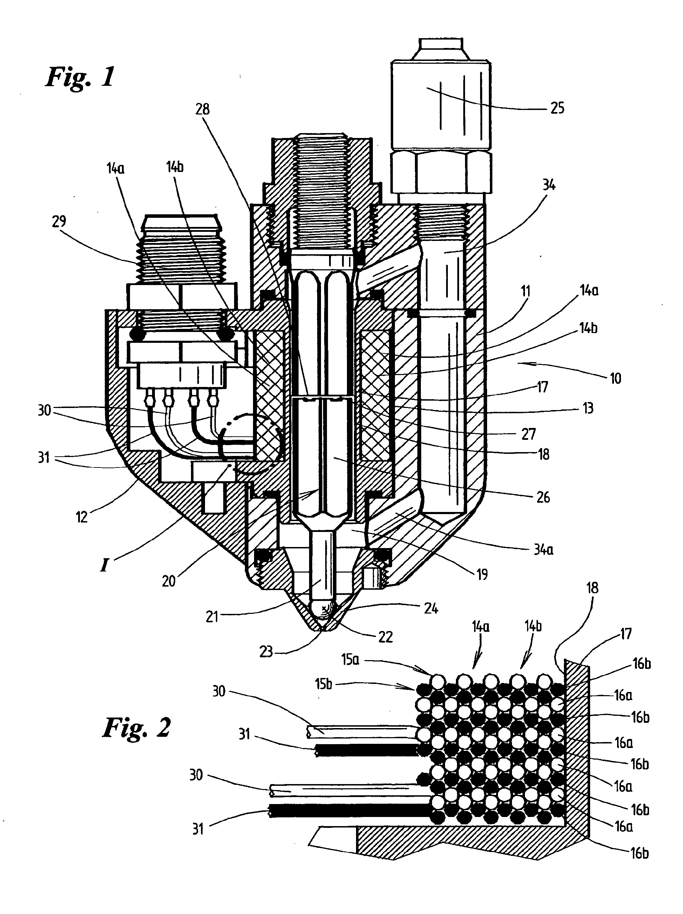

Hierzu umgeben die Spulen 15a, 15b der Elektromagneten 14a, 14b das Verschlussorgan 20 zumindest abschnittsweise. Das Verschlussorgan 20, insbesondere ein metallisches Kolbenstück 26 desselben, wirkt innerhalb der Spulen 15a, 15b als Kern der Elektromagneten 14a, 14b. Bei geeigneter, später noch näher beschriebener Stromzufuhr zu den Spulen 15a, 15b übertragen diese eine resultierende Magnetkraft auf das Kolbenstück 26, wodurch das Verschlussorgan 20 insgesamt aus der in Fig. 1 gezeigten Schließstellung in eine Öffnungsstellung bewegt wird, in der der Leim aus der Ventilöffnung 23 austreten kann.

Das Verschlussorgan 20 ist vorzugsweise permanent in der Schließstellung in Schließrichtung beaufschlagt durch ein Schließmittel bzw. Schließorgan. Dieses ist in dem vorliegenden Ausführungsbeispiel als zwei Einzelmagnete 27, 28 umfassender Dauermagnet ausgebildet, der eine permanente Magnetkraft auf das Verschlussorgan 20 im Sinne einer Schließbewegung ausübt. Natürlich können auch andere, geeignete Schließkräfte ausübende Schließmittel verwendet werden, etwa (Rückhol-)Federn oder dergleichen.

Der Einzelmagnet 27 des Dauermagneten ist am Ventilgehäuse 11 angebracht. Vorliegend ist der Einzelmagnet 27 am Endbereich eines Gewindebolzens 35 angebracht, und zwar im Bereich einer dem Kolbenstück 26 zugekehrten Endfläche in einer geeigneten Ausnehmung. Der andere Einzelmagnet 28 ist gegenüberliegend am Verschlussorgan 20 befestigt, und zwar ebenfalls in einer Ausnehmung. Die Einzelmagnete 27, 28 haben dabei auch bei geöffnetem Leimventil einen (geringen) Abstand voneinander.

Die einander benachbarten Magnete 27, 28 sind so positioniert, dass gleiche Pole einander zugekehrt sind, zum Beispiel die Nordpole. Durch die Dauer-Einzelmagnete 27, 28 wird dadurch permanent eine abstoßende Kraft auf das Verschlussorgan 20 übertragen, sodass dieses in Schließstellung beaufschlagt ist. Die durch die Elektromagnete 14a, 14b bewirkte Öffnungsbewegung des Verschlussorgans 20 bzw. des Kolbenstücks 26 überwindet dann diese permanente Schließkraft.

Das Steckergehäuse 12 des Ventils verfügt über einen Anschluss bzw. Stecker 29 für die Stromversorgung und Steuerung des Ventils 10. Von dem Stecker 29 führen unter anderem Stromleitungen 30 (Hin- und Rückleitungen) zu der Spule 15a des Elektromagneten 14a sowie Stromleitungen 31 (Hin- und Rückleitungen) zu der Spule 15b des Elektromagneten 14b.

In besonderer Weise sind die Wicklungen der Spulen 15a, 15b ausgebildet bzw. die Windungen 16a, 16b derselben auf dem Spulenkörper 17 aufgewickelt. In vertikaler bzw. in Axialrichtung des Spulenkörpers 17 folgen abwechselnd Windungen 16a der einen Spule 15a und Windungen 16b der anderen Spule 15b aufeinander. Die Windungen 16a, 16b liegen in der ersten Windungslage, in der die einzelnen Windungen 16a bzw. 16b unmittelbar am Spulenkörper 17 anliegen, und in sämtlichen weiteren, in Radialrichtung folgenden Windungslagen jeweils abwechselnd (bezogen auf die Axialrichtung) nebeneinander, vgl. Fig. 2.

Gemäß einer weiteren Besonderheit der Erfindung sind die Elektromagnete 14a, 14b bzw. die Spulen 15a, 15b derart ausgelegt, dass diese bei entsprechender Stromzufuhr Wärme abgeben können, die zur Erwärmung des durch das Ventil geführten Leims geeignet ist. Entsprechend kann dem Leimventil 10 sogenannter Heißleim zugeführt werden, der im Ventil durch die Elektromagnete 14a, 14b entsprechend erwärmt bzw. erhitzt wird. Die Elektromagnete 14a, 14b erfüllen damit eine Doppelfunktion. Durch sie wird zum einen das Verschlussorgan 20 in die Öffnungsstellung bewegt, zum anderen der Heißleim erhitzt.

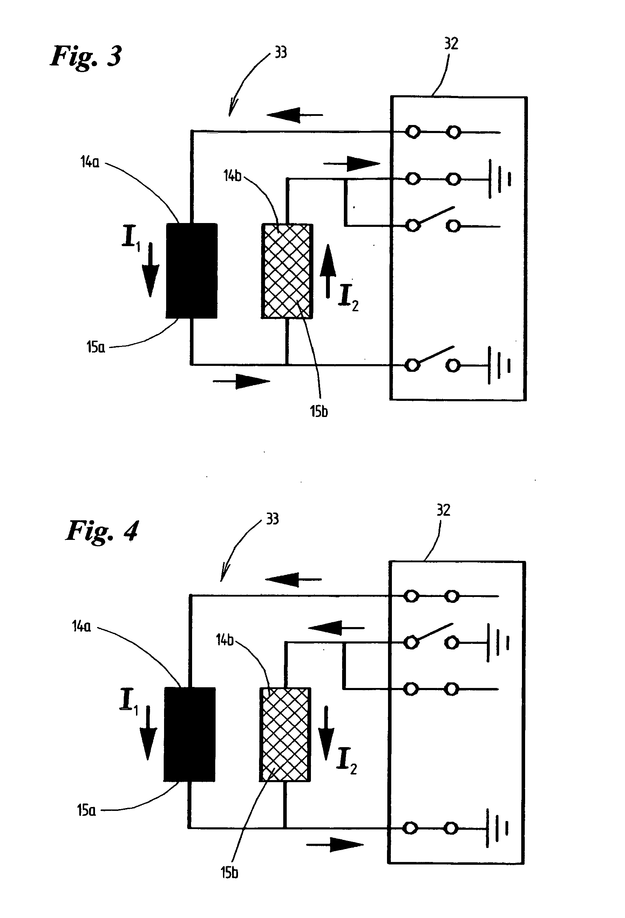

In ebenfalls besonderer Weise erfolgt dabei die Beaufschlagung der Elektromagneten 14a, 14b mit Strom. Die Fig. 3 und 4 zeigen eine Steuerung 32 sowie schematisch eine elektrische Schaltung 33, in der die Elektromagneten 14a, 14b bzw. die Spulen 15a, 15b integriert sind. Die Steuerung 32 sorgt dafür, die Schaltung 33 zwischen den in den Fig. 3 bzw. Fig. 4 gezeigten Schaltzuständen hin- und herzuschalten. Wie der Fachmann des Standes der Technik erkennt, gibt es für die elektrotechnische Umsetzung der Steuerung 32 bzw. der Schaltung 33 eine Vielzahl von Varianten. Erfindungsgemäß kommt es allerdings vornehmlich auf die Funktionsweisen derselben an. Diese werden nachfolgend näher beschrieben:

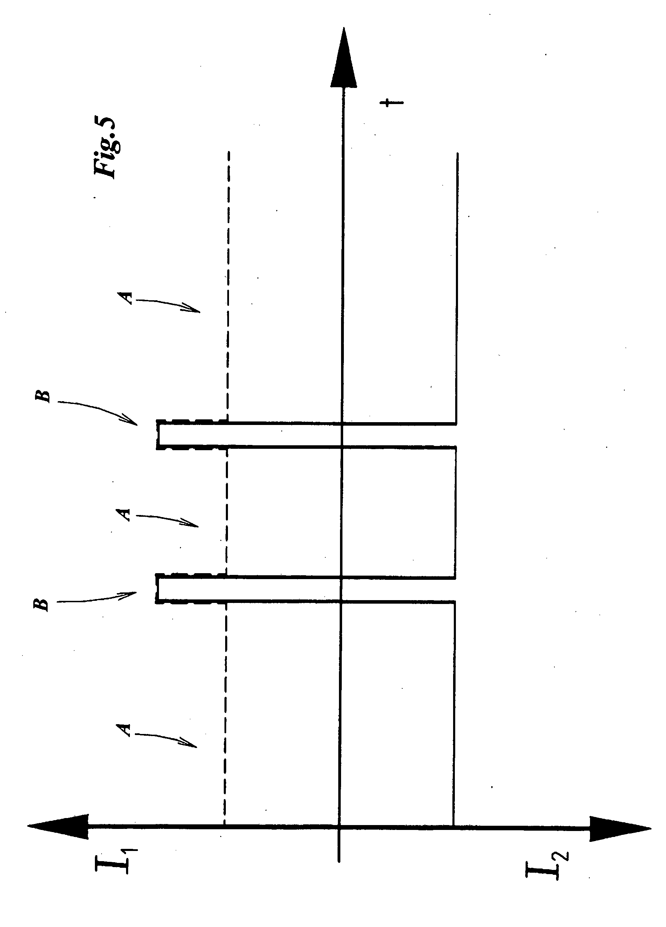

In einer Phase, in der das Ventil 10 geschlossen ist, üben die Elektromagnete 14a, 14b keine Öffnungskraft auf das Verschlussorgan 20 aus. Vielmehr geben die Elektromagnete 14a, 14b zur Erwärmung des Heißleims ausschließlich Wärme ab. Zu diesem Zweck schaltet die Steuerung 32 die Schaltung 33 - sofern nicht bereits geschehen - in den Schaltungszustand aus Fig. 3. Beide Elektromagneten 14a, 14b bzw. beide Spulen 15a, 15b werden in diesem Zustand mit Strömen I₁ bzw. I₂ beaufschlagt, die zueinander gegensinnige Richtungen gleicher Stärke aufweisen. In dem Diagramm in Fig. 5, in dem der zeitabhängige Stromstärkenverlauf durch die Spule 15a (I₁) in einer gestrichelten Linie dargestellt ist und der zeitabhängige Stromstärkenverlauf durch die Spule 15b (I₂) mit einer durchgezogenen Linie, ist diese Phase mit der Bezugsziffer A gekennzeichnet.

Durch die beschriebene Strombeaufschlagung erzeugen die in oben beschriebener Weise nebeneinander angeordneten Spulen 15a, 15b im Spuleninneren vorzugsweise gleich starke Magnetfelder in jeweils entgegengesetzten Axialrichtungen. Mit anderen Worten heben sich die Magnetfelder der Elektromagneten 14a, 14b im Inneren der Spulen 15a, 15b auf. Auf das Kolbenstück 26 bzw. das Verschlussorgan 20 werden dementsprechend durch die Elektromagnete keine Magnetkräfte ausgeübt, sodass das Verschlussorgan 20 in seiner durch die Einzelmagnete 27, 28 bewirkten Schließstellung verbleibt. Durch den Stromfluss durch die Elektromagneten 14a, 14b erzeugen die Spulen 15a, 15b ausschließlich Wärme, die an den in der Ventilkammer 19 befindlichen Leim abgeben wird und zur Erwärmung desselben dient.

Wie der Fachmann erkennt, ist es zwar wünschenswert, aber nicht zwingend erforderlich, dass die Ströme I₁ und I₂ gleich stark sind. Grundsätzlich würde genügen, dass die resultierende Magnetkraft der Elektromagnete 14a, 14b schwächer ist als die Schließkraft der Einzelmagnete 27, 28.

In einer anderen Phase, in der das Ventil 10 geöffnet wird bzw. geöffnet ist, üben die Elektromagneten 14a, 14b eine die Schließkraft überwindende Öffnungskraft auf das Verschlussorgan 20 aus. Zu diesem Zweck überführt die Steuerung 32 die Schaltung 33 in den Zustand entsprechend Fig. 4.

Mit der Bezugsziffer B ist in Fig. 5 die vorgenannte Phase gekennzeichnet, in der das Ventil 10 geöffnet ist. Wie in Fig. 5 zu erkennen ist, wird in dem Schaltungszustand der Fig. 4 zu diesem Zweck die Richtung des Stromes I₂ durch die Spule 15b gegenüber dem Schaltungszustand entsprechend Fig. 3 umgekehrt, sodass anschließend die Ströme I₁ bzw. I₂ durch die Elektromagnete 14a, 14b gleiche Richtungen und vorzugsweise gleiche Stärke aufweisen. Wie weiter zu erkennen ist, werden die Stromstärken I₁ und I₂ dabei gegenüber dem Schaltungszustand der Fig. 3 jeweils noch geringfügig erhöht, wobei dies ebenfalls nicht zwingend erforderlich ist.

Im Ergebnis werden die Magnetfelder im Inneren der Spulen 15a, 15b gleichgerichtet, sodass sich insgesamt eine in Öffnungsrichtung wirkende Magnetkraft auf das Verschlussorgan 20 bzw. das Kolbenstück 26 ergibt. Die Stromstärken I₁ und I₂ sind dabei derart gewählt, dass die resultierende Öffnungskraft größer ist als die durch die Einzelmagnete 27, 28 ausgeübte Schließkraft. Auch in den Phasen B, in denen das Ventil 10 geöffnet ist, sind die Stromstärken der Ströme I₁ bzw. I₂ im Übrigen bevorzugt derart gewählt, dass eine ausreichende Wärmeabgabe der Spulen 15a, 15b an den Heißleim erfolgt.

### Bezugszeichenliste

| | | | |
|---|---|---|---|
| 10 | Leimventil | 35 | Gewindebolzen |
| 11 | Ventilgehäuse | | |
| 12 | Steckergehäuse | | |
| 13 | Ventilgehäuseinnenraum | | |
| 14a | Elektromagnet | | |
| 14b | Elektromagnet | | |
| 15a | Spule | | |
| 15b | Spule | | |
| 16a | Windung | | |
| 16b | Windung | | |
| 17 | Spulenkörper | | |
| 18 | zylindrische Oberfläche | | |
| 19 | Ventilkammer | | |
| 20 | Verschlussorgan | | |
| 21 | Schaft | | |
| 22 | Kugel | | |
| 23 | Ventilöffnung | | |
| 24 | Ventilsitz | | |
| 25 | Leimanschluss | | |
| 26 | Kolbenstück | | |
| 27 | Einzelmagnet | | |
| 28 | Einzelmagnet | | |
| 29 | Stecker | | |
| 30 | Stromleitung | | |
| 31 | Stromleitung | | |
| 32 | Steuerung | | |
| 33 | Schaltung | | |
| 34 | Leimkanal | | |
| 34a | Anschlusskanal | | |

## Patentansprüche

1. Leimventil mit einem steuerbar betätigbaren Verschlussorgan (20), mit dem das Ventil (10) zwischen einer Öffnungsstellung und einer Schließstellung hin- und her schaltbar ist, und mit einer Wärmequelle (14a, 14b), mit der durch das Leimventil (10) führbarer Leim, insbesondere Heißleim, erwärmbar ist, **dadurch gekennzeichnet, dass** das Ventil (10) mindestens zwei unabhängig voneinander mit elektrischem Strom beaufschlagbare, entlang einer gemeinsamen Achse angeordnete Elektromagneten (14a, 14b) mit jeweils mindestens einer Spule (15a, 15b) aufweist mit denen das Verschlussorgan (20) betätigbar ist und mit denen der durch das Ventil (10) führbare Leim erwärmbar ist, wobei die beiden Elektromagneten (14a, 14b) derart positioniert und ausgebildet sind, dass sich die magnetischen Wirkungen der Spulen (15a, 15b) der beiden Elektromagneten (14a, 14b) abhängig von deren Beaufschlagung mit Strom entlang der gemeinsamen Achse entweder verstärken oder mindestens teilweise, vorzugsweise vollständig aufheben.

2. Leimventil gemäß Anspruch 1, **dadurch gekennzeichnet, dass** die Spulen (15a, 15b) unter Bildung mindestens einer, vorzugsweise mehrerer gemeinsamer Lagen aus Windungen (16a, 16b) gewickelt sind, bevorzugt, indem die unterste gemeinsame Windungslage auf einem geeigneten, beiden Spulen (15a, 15b) zugeordneten Spulenkörper (17) angeordnet ist.

3. Leimventil gemäß Anspruch 1 oder 2, **dadurch gekennzeichnet, dass** in einer gemeinsamen Windungslage die Windungen (16a) der einen Spule (15a) und die Windungen (16b) der anderen Spule (15b) abwechselnd aufeinanderfolgen.

4. Leimventil gemäß einem oder mehreren der vorhergehenden Patentansprüche, **dadurch gekennzeichnet, dass** die Wicklungen der Spulen (15a, 15b) das Verschlussorgan (20) mindestens abschnittsweise umgeben.

5. Leimventil gemäß einem oder mehreren der vorhergehenden Patentansprüche, **dadurch gekennzeichnet, dass** das Verschlussorgan (20) mittels eines Schließkraft ausübenden Schließorgans (27, 28) in die Schließstellung bewegbar ist, wobei das Verschlussorgan (20) durch in Öffnungsrichtung wirkende Magnetkraft der Elektromagneten (14a, 14b) in die Öffnungsstellung bewegbar ist, oder dass das Verschlussorgan (20) mittels eines Öffnungskraft ausübenden Öffnungsorgans in die Öffnungsstellung bewegbar ist, wobei das Verschlussorgan durch in Schließrichtung wirkende Magnetkraft der Elektromagneten (14a, 14b) in die Schließstellung bewegbar ist.

6. Verfahren zur Steuerung eines Leimventils gemäß Anspruch 1, bei dem die Spulen (15a, 15b) der Elektromagneten (14a, 14b) zur Schaltung des Ventils mit elektrischem Strom beaufschlagt werden, wobei durch die Spulen (15a, 15b) der beiden Elektromagnete (14a, 14b) entweder Strom mit gegensinnigen Richtungen geführt wird, sodass sich die magnetischen Wirkungen der Spulen (15a, 15b) der beiden Elektromagnete (14a, 14b) mindestens teilweise aufheben oder Strom mit gleichsinnigen Richtungen, sodass sich die magnetischen Wirkungen der beiden Spulen (15a, 15b) verstärken.

7. Verfahren gemäß Anspruch 6, **dadurch gekennzeichnet, dass** die Spulen (15a, 15b) in Phasen, in denen das Ventil (10) geschlossen ist, mit dem Strom in gegensinnigen Richtungen beaufschlagt werden, und dass die Spulen (15a, 15b) in Phasen, in denen das Ventil (10) geöffnet ist, mit dem Strom in gleichsinnigen Richtungen beaufschlagt wird.

8. Verfahren gemäß Anspruch 6 oder 7, **dadurch gekennzeichnet, dass** die Stromstärken der durch die beiden Spulen (15a, 15b) geführten Ströme in Phasen, in denen diese mit Strom gegensinniger Richtung durchflossen werden, gleich groß sind.

## Claims

1. A glue valve having a controllably actuable closure member (20), by way of which the valve (10) can be switched back and forth between an open position and a closed position, and having a heat source (14a, 14b), by way of which glue which can be guided through the glue valve (10), in particular hot glue, can be heated, **characterized in that** the valve (10) has at least two electromagnets (14a, 14b) which can be loaded with electrical current independently of one another, are arranged along a common axis and have in each case at least one coil (15a, 15b), by way of which the closure member (20) can be actuated and by way of which the glue which can be guided through the valve (10) can be heated, the two electromagnets (14a, 14b) being positioned and configured in such a way that the magnetic effects of the coils (15a, 15b) of the two electromagnets (14a, 14b) either reinforce one another along the common axis or cancel one another out at least partially, preferably completely, depending on their loading with current.

2. The glue valve as claimed in claim 1, **characterized in that** the coils (15a, 15b) are wound with the formation of at least one, preferably a plurality of common layers comprising windings (16a, 16b), preferably by the lowermost common winding layer being arranged on a suitable coil former (17) which is assigned to both coils (15a, 15b).

3. The glue valve as claimed in claim 1 or 2, **characterized in that** the windings (16a) of one coil (15a) and the windings (16b) of the other coil (15b) follow one another in an alternating manner in a common winding layer.

4. The glue valve as claimed in one or more of the preceding patent claims, **characterized in that** the windings of the coils (15a, 15b) surround the closure member (20) at least in sections.

5. The glue valve as claimed in one or more of the preceding patent claims, **characterized in that** the closure member (20) can be moved into the closed position by means of a closing member (27, 28) which exerts closing force, it being possible for the
closure member (20) to be moved into the open position by magnetic force of the electromagnets (14a, 14b) which acts in the opening direction, or **in that** the closure member (20) can be moved into the open position by means of an opening member which exerts opening force, it being possible for the closure member to be moved into the closed position by magnetic force of the electromagnets (14a, 14b) which acts in the closing direction.

6. A method for controlling a glue valve as claimed in claim 1, in which method the coils (15a, 15b) of the electromagnets (14a, 14b) are loaded with electrical current in order to switch the valve, with either current being fed in opposite directions through the coils (15a, 15b) of the two electromagnets (14a, 14b), with the result that the magnetic effects of the coils (15a, 15b) of the two electromagnets (14a, 14b) cancel one another out at least partially, or current being fed in the same directions, with the result that the magnetic effects of the two coils (15a, 15b) reinforce one another.

7. The method as claimed in claim 6, **characterized in that** the coils (15a, 15b) are loaded with the current in opposite directions in phases, in which the valve (10) is closed, and **in that** the coils (15a, 15b) are loaded with the current in the same directions in phases, in which the valve (10) is open.

8. The method as claimed in claim 6 or 7, **characterized in that** the current strengths of the currents which are guided through the two coils (15a, 15b) are equally great in phases, in which current flows through said coils (15a, 15b) in opposite directions.

## Revendications

1. Soupape à colle comprenant un organe de fermeture (20) pouvant être actionné de manière commandable, avec lequel la soupape (10) peut être commutée alternativement entre une position d'ouverture et une position de fermeture, et comprenant une source de chaleur (14a, 14b), avec laquelle de la colle, en particulier de la colle chaude, pouvant être acheminée à travers la soupape à colle (10), peut être chauffée, **caractérisée en ce que** la soupape (10) présente au moins deux électroaimants (14a, 14b) pouvant être sollicités indépendamment l'un de l'autre avec un courant électrique, disposés le long d'un axe commun, comprenant chacun au moins une bobine (15a, 15b) avec lesquels l'organe de fermeture (20) peut être actionné et avec lesquels la colle pouvant être acheminée à travers la soupape (10) peut être chauffée, les deux électroaimants (14a, 14b) étant positionnés et réalisés de telle sorte que les effets magnétiques des bobines (15a, 15b) des deux électroaimants (14a, 14b), en fonction de leur sollicitation avec du courant le long de l'axe commun, soit se renforcent soit s'annulent au moins partiellement, de préférence complètement.

2. Soupape à colle selon la revendication 1, **caractérisée en ce que** les bobines (15a, 15b) sont bobinées en formant au moins une couche, de
préférence plusieurs couches communes de spires (16a, 16b), de préférence en disposant la couche de spires commune la plus inférieure sur un corps de bobine (17) approprié, associé aux deux bobines (15a, 15b).

3. Soupape à colle selon la revendication 1 ou 2, **caractérisée en ce que** dans une couche de spires commune, les spires (16a) d'une bobine (15a) et les spires (16b) de l'autre bobine (15b) se succèdent en alternance.

4. Soupape à colle selon l'une quelconque ou plusieurs des revendications précédentes, **caractérisée en ce que** les spires des bobines (15a, 15b) entourent au moins en partie l'organe de fermeture (20).

5. Soupape à colle selon l'une quelconque ou plusieurs des revendications précédentes, **caractérisée en ce que** l'organe de fermeture (20) peut être déplacé dans la position de fermeture au moyen d'un organe d'obturation (27, 28) exerçant une force de fermeture, l'organe de fermeture (20) pouvant être déplacé dans la position d'ouverture par une force magnétique des électroaimants (14a, 14b) agissant dans la direction d'ouverture, ou **en ce que** l'organe de fermeture (20) peut être déplacé dans la position d'ouverture au moyen d'un organe d'ouverture exerçant une force d'ouverture, l'organe de fermeture pouvant être déplacé dans la position de fermeture par une force magnétique des électroaimants (14a, 14b) agissant dans la direction de fermeture.

6. Procédé de commande d'une soupape à colle selon la revendication 1, dans lequel les bobines (15a, 15b) des électroaimants (14a, 14b) sont sollicitées avec du courant électrique pour commuter la soupape, du courant étant acheminé dans des directions de sens opposés à travers les bobines (15a, 15b) des deux électroaimants (14a, 14b) de sorte que les effets magnétiques des bobines (15a, 15b) des deux électroaimants (14a, 14b) s'annulent au moins partiellement ou bien du courant étant acheminé dans des directions de même sens, de telle sorte que les effets magnétiques des deux bobines (15a, 15b) se renforcent.

7. Procédé selon la revendication 6, **caractérisé en ce que** les bobines (15a, 15b), dans des phases dans lesquelles la soupape (10) est fermée, sont sollicitées avec le courant dans des directions de sens opposés, et **en ce que** les bobines (15a, 15b), dans des phases dans lesquelles la soupape (10) est ouverte, sont sollicitées avec le courant dans des directions de même sens.

8. Procédé selon la revendication 6 ou 7, **caractérisé en ce que** les intensités de courant des courants acheminés à travers les deux bobines (15a, 15b), dans des phases dans lesquelles elles sont parcourues par du courant dans une direction de sens opposé, sont identiques.
